(19) Europäisches Patentamt
European Patent Office
Office européen des brevets

(11) Veröffentlichungsnummer: **0 173 793**
**A2**

(12) **EUROPÄISCHE PATENTANMELDUNG**

(21) Anmeldenummer: **85103264.9**

(51) Int. Cl.[4]: **C 01 B 33/08**

(22) Anmeldetag: **20.03.85**

(30) Priorität: **05.09.84 DE 3432678**

(43) Veröffentlichungstag der Anmeldung:
**12.03.86 Patentblatt 86/11**

(84) Benannte Vertragsstaaten:
**AT BE CH DE FR GB IT LI LU NL SE**

(71) Anmelder: **D. Swarovski & Co.**
**Postfach 15**
**A-6112 Wattens(AT)**

(72) Erfinder: **Porcham, Wolfgang, Dr.**
**Waldweg 1**
**A-6060 Mils(AT)**

(74) Vertreter: **Kador . Klunker . Schmitt-Nilson . Hirsch**
**Corneliusstrasse 15**
**D-8000 München 5(DE)**

(54) **Verfahren zur Herstellung von Siliciumtetrafluorid.**

(57) Verfahren zur Herstellung von Siliciumtetrafluorid durch Hydrolyse von siliciumfluorhaltigen Gasen, wobei das Hydrolysat mit Natrium-, Kalium- und/oder Bariumfluorid umgesetzt und des erhaltene Reaktionsprodukt termisch unter Bildung des Siliciumtetrafluorids zersetzt wird.

EP 0 173 793 A2

Die Erfindung bezieht sich auf ein Verfahren zur Herstellung von reinem Siliciumtetrafluorid aus siliciumfluorhaltigen Gasen, wie sie beispielsweise beim nassen Aufschluß von Rohphosphaten oder beim Beizen von Glaskörpern mit einer Mischung aus Fluß- und Schwefelsäure auftreten. Diese Gase enthalten vorwiegend Siliziumtetrafluorid, gegebenenfalls enthalten sie auch Hexafluorosiloxan, Fluorokieselsäuren und Fluorwasserstoff.

Siliciumtetrafluorid ($SiF_4$) findet vielfältige Verwendung.

Es dient beispielsweise zur Behandlung getrockneter Betonteile, um deren Wasserdichtigkeit und Resistenz gegen Korrosion und Abrasion entscheidend zu verbessern (G. Roederer, Chim.Ind. (Paris) 84, 912-924, 1960).

Es findet auch Verwendung zur Erhöhung des hydrophoben Charakters von kristallinen Molekularsieben (Europäische Patentanmeldung 83107533.8).

Es dient zur Herstellung von hochdisperser Kieselsäure und Fluorwasserstoff (US-PS 3,969,485, DE-OS 2132426, DE-OS 2132428, DE-OS 2132429).

Es eignet sich zur Herstellung von Orthokieselsäureestern (DE-PS 2609767).

Es kann daraus Reinstsilicium gewonnen werden (DE-OS 3206766, A. Sanjurjo et al, J. Electrochem. Soc. 128 (1981) 179-184).

Es eignet sich ferner zur Gewinnung von amorphem Silicium für photovoltaische Zellen (vgl. z.B. Makoto Konagai et al, Appl.Phys. Lett. 36 (1980) 599 und A. Madan, S.R. Ovshinsky, E. Benn, Phil.Mag. B 40, 259 (1979).

Es dient ferner zur Gewinnung von Silan (D. K. Padma et al, J. Fluorine Chem. 1979, 14(4), 327-9, DE-PS 1034159, DE-PS 1080077, US-PS 2 933 374).

Es eignet sich auch als Ätzmittel für siliciumhaltige Materialien in der Halbleiterindustrie (US-PS 4,264,409.

Es ist bereits bekannt (Proc.-Fert.Soc. (PFRSAZ) V 163, 1977), Siliciumtetrafluorid aus Abgasen, die beim nassen Aufschluß von Rohphosphaten entstehen, herzustellen, indem diese hydrolysiert und zur Auflösung ausgefallener Kieselsäure mit fluorwasserstoffhaltigen Abgasen zu einer etwa 20%igen Hexafluorokieselsäurelösung umgesetzt werden. Diese wird bei 100 bis 110°C in Reaktoren aus Nickellegierungen mit konzentrierter Schwefelsäure unter Bildung von Siliciumtetrafluorid, das unter diesen Bedingungen flüchtig ist, zersetzt. Die Aufgabe von Hexafluorokieselsäurelösung kann solange erfolgen, bis die Konzentration der Schwefelsäure auf 70 bis 75 % abgesunken ist.

Der Anwendung dieses Verfahrens stehen große Materialprobleme in Anbetracht der Korrosivität der Säuremischungen bei der erforderlichen hohen Reaktionstemperatur und der Anfall großer Mengen an Abfallschwefelsäure, die mit Fluorverbindungen verunreinigt sind, entgegen.

Aufgabe der Erfindung ist die Schaffung eines Verfahrens zur Herstellung von reinem Siliciumtetrafluorid ohne gleichzeitigem Anfall kaum verwendbarer Nebenprodukte.

Der Erfindung liegt die Erkenntnis zugrunde, daß diese Aufgabe dadurch gelöst werden kann, daß durch Umsetzung eines durch Hydrolyse von siliciumfluorhaltigen

Gasen erhaltenen Hydrolysats mit Natrium-, Kalium- oder Bariumfluorid ein einziges Produkt, nämlich ein entsprechendes Alkali- bzw.Erdalkalihexafluorosilicat, erhalten wird, obwohl das Hydrolysat komplexe Verbindungen enthält. Das Hexafluorosilicat kann dann auf einfache Weise zu reinem Siliciumtetrafluorid weiterverarbeitet werden.

Gegenstand der Erfindung ist ein Verfahren zur Herstellung von Siliciumtetrafluorid, das dadurch gekennzeichnet ist, daß siliciumfluorhaltige Gase hydrolysiert werden, das Hydrolysat mit Natrium-, Kalium- oder Bariumfluorid umgesetzt und das erhaltene Reaktionsprodukt thermisch unter Bildung des Siliciumtetrafluorids zersetzt wird.

Es ist besonders vorteilhaft, daß das bei der thermischen Zersetzung ebenfalls anfallende Metallfluorid im Kreislauf zurückgeführt werden kann.

Das erfindungsgemäße Verfahren kann anhand der nachstehenden Gleichungen illustriert werden.

$$3SiF_4 + 2H_2O \longrightarrow 2H_2SiF_6 + SiO_{2aq} \quad (1)$$

$$(4 + x)\ H_2SiF_6 + (2-x)SiO_{2\cdot aq} \rightleftharpoons 6\ H_xSiF_{4+x} + (4-2x)H_2O \quad (1a)$$

$$2H_2SiF_6 + SiO_{2.aq} + 6M^IF\ (3M^{II}F_2) \longrightarrow 3\ M^I_2SiF_6\ (3M^{II}SiF_6) + 2H_2O \quad (2)$$

$$3\ M^I_2SiF_6\ (3M^{II}SiF_6) \longrightarrow 3\ SiF_4 + 6M^IF\ (3M^{II}F_2) \quad (3)$$

$M^I$ = Na, K

$M^{II}$ = Ba

x = 0,5 bis 2

Gemäß Gleichung (1) erfolgt die Hydrolyse mit Wasser. Das System Hexafluorokieselsäure ($H_2SiF_6$) und hydratisierte Kieselsäure ($SiO_{2.aq}$) steht mit einkernigen Komplexen der allgemeinen Formel $H_xSiF_{4+x}$ im Gleichgewicht, wobei x in Abhängigkeit von der Totalkonzentration der Hexafluorokieselsäure Werte von etwa 0,5 bis maximal 2 erreicht. So beträgt z.B. für 30%ige $H_2SiF_6$ x = 1,1 (vgl. Ullmann 4. Aufl., Bd. 11, S. 614). Derzeit ist allerdings noch ungeklärt, inwieweit noch andere Liganden als F, wie z.B. OH oder $OH_2$ an die einkernigen Komplexe koordiniert sind.

Es wurde nun gefunden, daß durch Rühren dieser Suspension von Kieselsäuregel in Fluorokieselsäuren mit Natrium-, Kalium- oder Bariumfluorid sich das Gleichgewicht wieder ganz auf die Seite der entsprechenden Hexafluorosilicate verschiebt, die als schwerlösliche Verbindungen ausfallen, wobei die Fluoride vorzugsweise in stöchiometrischen Mengen gemäß Gleichung (2) eingesetzt werden.

Mit dem Hexafluorosilicat bildet sich eine einzige, definierte Silicium-Fluor-Verbindung. Das Hexafluorosilicat wird abgetrennt, getrocknet und anschließend thermisch zersetzt, wobei reines Siliciumtetrafluorid erhalten und das eingesetzte Metallfluorid zurückgewonnen wird, welches letztere in den Prozess zurückgeführt werden kann.

Die Durchführung des Verfahrens wird näher anhand des in der Zeichnung dargestellten Fließbildes erläutert.

Das siliciumfluorhaltige Gas wird in Abgaswäschern mit Wasser hydrolysiert. Die Provenienz des siliciumfluorhaltigen Gases ist an sich gleichgültig.
Das Si/F-Verhältnis der Gase soll vorzugsweise zwischen 1/4 und 1/5 liegen, um die Flußsäurekonzentration im Hydrolysat nicht zu sehr ansteigen zu lassen. In Abgasen von Säurepolierungen, in denen Glaskörper mit einer Mischung aus Fluß- und Schwefelsäure gebeizt werden, kann der Fluorgehalt Werte von bis 50g/$Nm^3$, gegebenenfalls bis 100g/$Nm^3$, erreichen, das Si/F-Verhältnis liegt im gewünschten Bereich. In Anlagen zum nassen Aufschluß von Rohphosphaten ist der Fluoranteil im Abgas abhängig von der eingesetzten Rohphosphatqualität. Als Richtwert können etwa 20g Fluor/$Nm^3$ angegeben werden. Der Siliziumanteil ist ebenfalls in Abhängigkeit von der eingesetzten Rohphosphatqualität häufig kleiner als 1/4 oder 1/5 der Menge an Fluor in Grammatomen. Zweckmäßigerweise wird dann dem Aufschlußgut quarz- oder kieselsäurehaltiges Material zugesetzt.

Das erfindungsgemäße Verfahren kann mit Siliciumtetrafluoridqualitäten jeglicher Konzentration angewandt werden und folglich bei hohen Konzentrationen als "Reinigungsverfahren" angewandt werden.

Das erhaltene Hydrolysat wird in korrosionsresistenten Rührkesseln mit der stöchiometrischen Menge an Metallfluorid, das aus dem Reaktor zur thermischen Zersetzung von Hexafluorosilicat kommt, vorzugsweise 1/2 bis 4 Stunden lang kräftig gerührt. Das Metallfluorid kann dabei in Pulverform, in Lösung oder besonders vorteilhaft, als Suspension, eingesetzt werden. Das im Rührkessel erhaltene Hexafluorosilicat wird abgetrennt und getrocknet. Das bei der Abtrennung anfallende Filtrat und die bei der Trocknung anfallende Abluft können in den Abgaswäscher zurückgeführt werden. Dabei werden beim Einsatz von Natrium- und Kaliumfluorid Hexafluorosilicatausbeuten von über 90 %, beim Einsatz von Bariumfluorid von etwa 85 %, bezogen auf eingesetztes Metallfluorid, erhalten.

Die Reinheit der gewinnbaren Alkalihexafluorosilicate ist größer als 99 %, die des Bariumhexafluorosilicats etwa 90 %. Die Alkalihexafluorosilicate sind im wesentlichen verunreinigt mit Kieselsäure und Wasser, das Bariumhexafluorosilicat zusätzlich vor allem mit Bariumfluorid.

Die getrockneten Hexafluorosilicate werden unter Aufrechterhaltung eines entsprechenden Unterdruckes thermisch zu Siliciumtetrafluorid und Metallfluorid zersetzt. Dieser Druck wird durch Abpumpen des entstehenden Siliciumtetrafluorids aufrechterhalten. Dabei haben sich folgende Zersetzungsbedingungen bewährt:

| | | |
|---|---|---|
| bewährt: | für $Na_2SiF_6$ | 100 mbar bei 600°C, |
| | für $K_2SiF_6$ | 100 mbar bei 550°C, |
| | für $BaSiF_6$ | 100 mbar bei 500°C. |

Allgemein können Bedingungen von 0,1 bis 500 mbar und 400 bis 800 °C angewandt werden. Das erhaltene Siliciumtetrafluorid hat zumindest eine Reinheit von größer als 90 Vol.-%, vorzugsweise 95 Vol.-% und insbesondere größer 99 Vol.-%, dabei hängt die Reinheit des erhaltenen Siliciumtetrafluorids im wesentlichen von der Leckrate der Zersetzungsanlage ab, wobei sich $SiF_4$-Qualitäten mit einer Reinheit größer 99 Vol.-% leicht erzielen lassen. Die Verunreinigungen sind im wesentlichen Luft und Spuren von Hexafluorosiloxan, Fluorwasserstoff und Schwefeldioxid. Das bei der thermischen Zersetzung erhaltene Metallfluorid wird wieder in den Prozess zurückgeführt und dem Hydrolysat aus siliciumfluorhaltigen Abgasen im Rührkessel zudosiert.

Die besonderen Vorteile des erfindungsgemäßen Verfahrens liegen in seiner Wirtschaftlichkeit und Umweltfreundlichkeit. Das Verfahren ist wirtschaftlich, weil es von praktisch wertlosen Abgaswäscherflüssigkeiten, die in sehr großen Mengen anfallen und die aus Umweltschutzgründen auf keinen Fall in die Vorfluter geleitet werden dürfen, ausgeht.

Das ganze Verfahren kann in an sich bekannten und betrieblich erprobten Anlagen durchgeführt werden. Reaktoren aus teuren Nichteisenlegierungen sind nicht erforderlich.

Das Verfahren ist umweltfreundlich, weil es aus Abgasen reines Siliciumtetrafluorid zu gewinnen gestattet, wobei alle dazu erforderlichen Hilfsstoffe

in einem Kreisprozeß geführt werden. Substanzen, die entsorgt werden müßten, fallen nicht an, was bei der physiologischen Wirksamkeit von Fluorverbindungen von besonderem Vorteil ist.

Die Erfindung wird durch das nachstehende Beispiel näher erläutert.

## Beispiel

Abgase aus einer Säurepolieranlage, in der Glaskörper mit einer Mischung aus Fluß- und Schwefelsäure gebeizt werden, wurden in einem Kreiselwäscher hydrolisiert. 800 l dieses Hydrolysats, einer Suspension von gallertartiger Kieselsäure in Fluorokieselsäuren mit einem Gesamtgehalt von 94,68 g F/l und 33,34 g Si/l, wurden in einen Rührkessel überführt, mit 80 kg gemahlenem Natriumfluorid versetzt, 2 Stunden kräftig gerührt und abfiltriert. Das Filtrat wurde in den Abgaswäscher zurückgeleitet und der Filterkuchen durch eine Wirbelschicht-Trocknungsanlage gefahren. Es wurden 169 kg pulverförmiges Natriumhexafluorosilicat erhalten in einer Ausbeute von 94 % der Theorie bezogen auf eingesetztes Natriumfluorid und mit einem Gehalt von 99,5 % Natriumhexafluorosilicat. Die Abluft aus der Trocknungsanlage wurde in den Kreiselwäscher eingeleitet. 40 kg des erhaltenen Natriumhexafluorosilicats wurden in eine zunderbeständige Stahltrommel gefüllt und im Verlaufe von 2 Stunden bei 620°C und einem Druck kleiner 200 mbar, der durch Abpumpen aufrechterhalten wurde, thermisch zu Natriumfluorid und $SiF_4$ zersetzt.

Es wurden 21,7 kg $SiF_4$, das sind 98 % der Theorie bezogen auf eingesetztes Natriumhexafluorosilicat, mit einem Gehalt von 99 Vol.-% erhalten. An Verunreinigungen wurde gefunden:

| | |
|---|---|
| Luft: | 0,6 Vol.-% |
| $Si_2OF_6$ | 0,2 Vol.-% |
| $SO_2$ | < 0,005 Vol.-% |

D. SWAROVSKI & CO.
Postfach 15
A-6112 Wattens/Tirol

# VERFAHREN ZUR HERSTELLUNG VON SILICIUMTETRAFLUORID

## Patentansprüche

1. Verfahren zur Herstellung von Siliciumtetrafluorid, dadurch gekennzeichnet, daß siliciumfluorhaltige Gase hydrolysiert werden, das Hydrolysat mit Natrium-, Kalium- oder Bariumfluorid umgesetzt und das erhaltene Reaktionsprodukt thermisch unter Bildung des Siliciumtetrafluorids zersetzt wird.

2. Verfahren nach Anspruch 1, dadurch gekennzeichnet, daß das bei der thermischen Zersetzung anfallende Metallfluorid im Kreislauf zurückgeführt wird.

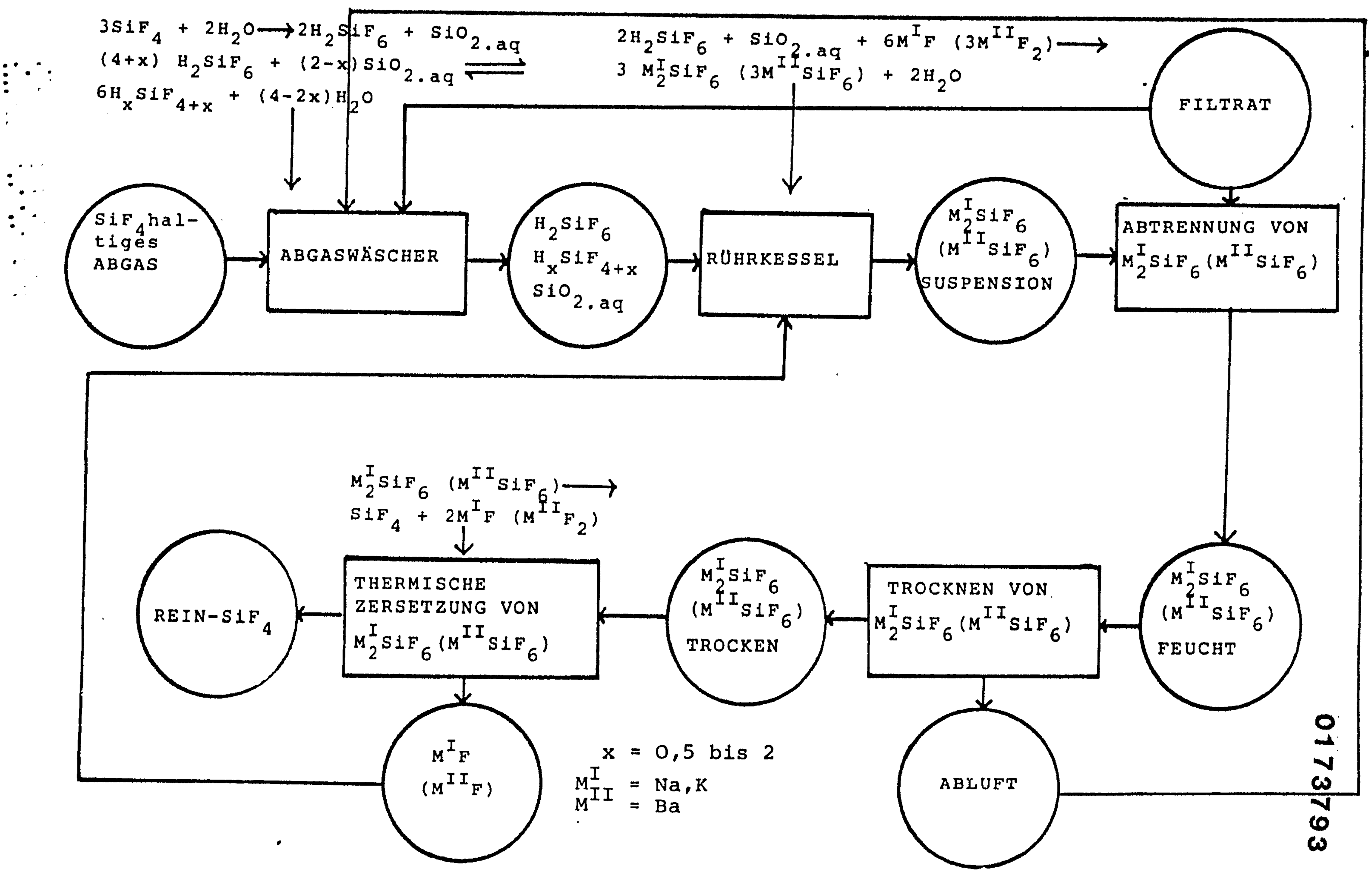

$3SiF_4 + 2H_2O \longrightarrow 2H_2SiF_6 + SiO_{2.aq}$
$(4+x)\ H_2SiF_6 + (2-x)SiO_{2.aq} \rightleftharpoons$
$6H_xSiF_{4+x} + (4-2x)H_2O$
$2H_2SiF_6 + SiO_{2.aq} + 6M^IF\ (3M^{II}F_2) \longrightarrow$
$3\ M^I_2SiF_6\ (3M^{II}SiF_6) + 2H_2O$
FILTRAT
$SiF_4$haltiges ABGAS
ABGASWÄSCHER
$H_2SiF_6$
$H_xSiF_{4+x}$
$SiO_{2.aq}$
RÜHRKESSEL
$M^I_2SiF_6$ $(M^{II}SiF_6)$ SUSPENSION
ABTRENNUNG VON $M^I_2SiF_6(M^{II}SiF_6)$
$M^I_2SiF_6\ (M^{II}SiF_6) \longrightarrow$
$SiF_4 + 2M^IF\ (M^{II}F_2)$
REIN-$SiF_4$
THERMISCHE ZERSETZUNG VON $M^I_2SiF_6(M^{II}SiF_6)$
$M^I_2SiF_6$ $(M^{II}SiF_6)$ TROCKEN
TROCKNEN VON $M^I_2SiF_6(M^{II}SiF_6)$
$M^I_2SiF_6$ $(M^{II}SiF_6)$ FEUCHT
$M^IF$ $(M^{II}F)$
$x = 0,5$ bis 2
$M^I$ = Na,K
$M^{II}$ = Ba
ABLUFT